# EUROPEAN PATENT SPECIFICATION

(11) **EP 2 276 357 B1**
(45) Date of publication and mention of the grant of the patent: **21.09.2011**
(21) Application number: 09723528.7
(22) Date of filing: 18.03.2009
(51) Int. Cl.: A23L 1/30, A23K 1/00

(54) **LONG-LIFE PROBIOTIC FOOD PRODUCT**
HALTBARES PROBIOTISCHES NAHRUNGSMITTELPRODUKT
PRODUIT ALIMENTAIRE PROBIOTIQUE DE LONGUE CONSERVATION

(30) Priority: 18.03.2008 EP 08152922
(43) Date of publication of application: 26.01.2011
(73) Proprietor: Friesland Brands B.V., 3818 LE Amersfoort (NL)
(72) Inventor: DE VRIES, Ynte Piet, 7412 DR Deventer (NL); TE BIESEBEKE, Rob, NL-3825 GV Amersfoort (NL)
(74) Representative: Jansen, Cornelis Marinus
(86) International application number: PCT/NL2009/050129
(87) International publication number: WO 2009/116864

(56) References cited:
- WO-A-03/039260
- WO-A-2004/080200
- WO-A-2007/066108
- WOLKEN W A M ET AL: "What can spores do for us?" TRENDS IN BIOTECHNOLOGY, ELSEVIER PUBLICATIONS, CAMBRIDGE, GB, vol. 21, no. 8, 1 August 2003 (2003-08-01), pages 338-345, XP004442024 ISSN: 0167-7799 cited in the application
- HONG ET AL: "The use of bacterial spore formers as probiotics" FEMS MICROBIOLOGY REVIEWS, ELSEVIER, AMSTERDAM, NL, vol. 29, no. 4, 1 September 2005 (2005-09-01), pages 813-835, XP005027398 ISSN: 0168-6445 cited in the application
- CASULA GABRIELLA ET AL: "Bacillus probiotics: Spore germination in the gastrointestinal tract" APPLIED AND ENVIRONMENTAL MICROBIOLOGY, vol. 68, no. 5, May 2002 (2002-05), pages 2344-2352, XP009102658 ISSN: 0099-2240 cited in the application

## Description

The invention pertains to a probiotics-containing food product, particularly a long-life food product. More particularly the invention pertains to a liquid dairy product (like e.g. dairy drinks, dairy derived food products and dairy food ingredients) or a fruit juice.

Probiotics are defined as live microorganisms which when administered in adequate amounts confer a health benefit on the host (FAO/WHO). By definition, all probiotics have a proven non-pathogenic character. In general these health benefits are associated with improving the balance of human or animal micro flora in the gastro-intestinal tract.

The fact that microflora in the GI-tract is important for human well being is already known since long. For example, in 1970 a review paper entitled "Normal Fecal Flora of Man" published in The American Journal of Clinical Nutrition (Vol. 23: pp. 1457-1465) starts with: The influence of the balance of the normal flora of the intestinal tract on the health and well-being of the host is well documented. Intestinal bacteria are reported to be implicated in metabolism of amongst many other components: carbohydrates (e.g. prebiotics, sugars), proteins, fats, cholesterol, nucleotides, hormones, vitamins and minerals. The human microflora ecology affects amongst others: the natural resistance, immunity, osteoporosis, cancers, and the incidence of caries. Numerous publications have shown mechanistic explanations and clinical studies show efficacy that micro flora appearing in the gastrointestinal tract have an important impact on resistance against infections. Also the intestinal micro flora (and also temporary colonizing probiotic species) affects amongst other aspects: gut health (e.g. epithelial functionality, mucus growth, epithelial barrier function, mucosal immunity, defecation patterns, intestinal transit), atopic disorders, vaginal infections, skin disorders, human wellbeing and human moods. In fact one can state that microflora is effective in any place in or on the human body.

The invention relates to food products, particularly having a dairy and/or fruit (juice) origin. These products are particularly of the type generally intended for daily consumption and intended to have a positive effect on human or animal health, and/or to improve human or animal inconvenience. The intended effects are believed to relate to restoring, recovering, balancing or enforcing the microbial ecology that is naturally present in and on human or animal bodies.

It is well-known to provide dairy products that comprise probiotic micro-organisms, normally from the genus Lactobacillus e.g. *Lactobacillus paracasei*, *Lactobacillus casei*, *lactobacillus helveticus*, *Lactobacillus rhamnosus*, *and Lactobacillus johnsonii*, *lactobacillus acidophilus*, *Lactobacillus salivarius*, *Lactobacillus* or others and of the genus Bifidobacterium like e.g. *Bifidobacterium animalis*, *Bifidobacterium lactis*, *Bifidobacterium bifidum*, *Bifidobacterium Breve*, *Bifidobacterium longum*, *Bifidobacterium lactis*, *Bifidobacterium infantis*, *and others*. Also other strains are used as probiotics. Alfred Nissle isolated in 1917 a strain of *Escherichia coli* from the feces of a soldier who fought in the First World War and who did not develop enterocolitis during a severe outbreak of shigellosis. Since antibiotics were not yet discovered, this strain was used with success to treat acute cases of infectious intestinal diseases (salmonellosis and shigellosis). Another well know example is *Lactobacillus delbrueckii* subsp. *bulgaricus*, a non motile and non spore forming bacterial strain that is one of several bacteria used for the production of yogurt. Ilya Ilyich Mechnikov, a Russian Biologist was convinced of his hypothesis that regular consumption of yoghurt supported the long and healthy lifespans of Bulgarian peasants. It is suggested that this was due to the probiotic species *Lactobacillus bulgaricus* present in yoghurt. O. Adolfsson et al. described in the American Journal of Clinical Nutrition (2004, volume 80, pp. 245-256) that Yoghurt itself also has medical uses, in particular for a variety of gastrointestinal conditions and Ripudaman S. Beniwal, et al. reported in Digestive Diseases and Sciences (volume 48, pp. 2077-2082) the beneficial effects in preventing antibiotic-associated diarrhoea. Without wishing to be bound by theory, the inventors firmly believe that the described beneficial effects are linked to the lactic acid bacteria present in these yoghurts.

Certain probiotic strains are capable of producing bioactive components that might add up to the direct effect that a probiotic strain can have or in some cases can deliver. A good example of this additional advantage of a probiotic strain is *Bacillus subtilis var. natto* that is producing vitamin K2 that helps to protect against the degeneration of bones. Another example could be *Mortiella spp.* (*spp.* stands for subspecies) that produces large quantities of LCPUFA's (long chain polyunsaturated fatty acids) under which arachidonic acid that can regulate cytoskeleton functionality of epithelial cells and through that epithelial barrier functionality. Yet another example is *Bacillus subtilis* that can produce antibiotics that can modulate the gastrointestinal microflora.

The application of probiotics in dairy products with a limited shelf-life is well known. The application of probiotics in fruit juices or other kind of juices is a largely unexplored area.

The foregoing products are generally fresh products, of limited shelf-life, and generally requiring refrigerated storage. Many dairy products and fruit juices are produced as long-life products, that can be stored non-refrigerated. A problem is that probiotics cannot be included in these products without adversely affecting, or jeopardizing, the shelf life. Since the shortening of the shelf-life would remove the very *raison d'etre* of products such as long-life dairy products and fruit juices, probiotic micro-organisms cannot be effectively used in these products. Hence, it were desired to provide a manner in which also long-life food products can be provided with the effects associated with probiotic micro-organisms.

The term "long-life food product" generally refers to a product that, either by its ingredients *per se* or by a special treatment, or both, is preservable, and can be stored for an extended period of time (e.g. two or more weeks, preferably several months and more preferably several years, as further defined below) and most preferably at ambient conditions, i.e. not refrigerated.

In order to better address the foregoing desire, the invention provides, in one embodiment, a long-life food product comprising probiotic organisms in a dormant stage. This refers to fungal, yeast or bacterial spores or dormant cells. The invention, in another embodiment, provides a pasteurized liquid food product selected from the group consisting of dairy drinks, fruit juices, and concentrates thereof, the product comprising probiotic fungal, yeast and/or bacterial spores or dormant cells. In yet another embodiment, the invention pertains to the use of probiotic bacterial, yeast and/or fungal spores or dormant cells as a probiotic ingredient in long-life food products, and particularly in pasteurized liquid food product selected from the group consisting of dairy drinks, fruit juices, and concentrates thereof. The invention, in yet another embodiment, provides a food product in the form of a food ingredient that has been derived from milk (e.g. Deminal 90 and/or GOS and/or lactose that are produced by Friesland Foods DOMO and/or any other dairy derived ingredient that can be used for food purposes), fermented milk that contain probiotic spores or dormant probiotic cells. In a further embodiment, the invention pertains to said use for the purpose of retaining the shelf-life of a probiotic long-life food product. I.e., this allows obtaining a probiotic food product on the basis of a long-life food product, and yet be able to store the product in the same way as without having rendered it probiotic. The retaining of the shelf-life does not necessarily mean that the shelf-life is exactly the same, as it could be affected (either way) by the introduction of probiotic spores or dormant vegetative cells. It will at any rate mean that the product remains recognizable as a long-life food product such as referred to above, and as further defined hereinbelow.

In addition to the advantage of reduced or no microbial growth during storage, a further advantage is attained in the case of relatively acidic foods, and partocularly drinks, such as fruit juices and yoghurt or yoghurt drinks, in which the dormant probiotic organisms remain viable for a longer period of time than living probiotics.

It is remarked that WO 2004/080200 relates to the addition of probiotic spores to food products, notably animal feeds. The document addresses the stability of probiotic bacteria. The document does not relate to the use of probiotic bacterial, yeasts and/or fungal spores or dormant bacterial, fungal or yeast cells, or combinations thereof in long-life probiotic food products. Other references on bacterial spores include WO 2007/066108; WO 03/039260; Wolken et al.. Trends in Biotechnology, vol. 21, no. 8, 1 August 2003, pages 338-345; Hong et al., FEMS Microbiology Reviews, vol. 29, no 4., 1 september 2005, pages 813-835; Casula et al., Applied and Environmental Microbiology, vol. 68, no. 5, May 2002, pages 2344-2352. None relates to long-life food products.

The present invention uniquely provides for the possibility that one or more of the numerous bacterial and/or fungal species that inhabit our gastrointestinal-tract and/or that have been used for ages for human consumption or for human food production are used in long-life probiotic food products. Species that can be used within this context preferably are selected from those present in the (human) GI-tract, and more preferably originate from the following genus: *Lactobacillus*, *Bifidobacterium*, *Veillonella*, *Desemzia*, *Coprococcus*, *Collinsella*, *Citrobacter, Turicibacter*, *Sutterella*, *Subdoligranulum*, *Streptococcus*, *Sporobacter*, *Sporacetigenium*, *Ruminococcus*, *Roseburia*, *Proteus*, *Prevotella*, *Parabacteroides*, *Papillibacter*, *Oscillospira*, *Melissococcus*, *Dorea*, *Dialister*, *Clostridium*, *Cedecea*, *Catenibacterium*, *Butyrivibrio*, *Buttiauxella*, *Bulleidia*, *Bilophila*, *Bacteroides*, *Anaerovorax*, *Anaerostopes*, *Anaerofilum*, *Enterobacteriaceae*, *Fermicutes*, *Atopobium*, *Alistipes*, *Akkermansia*, *Acinetobacter*, *Slackie*, *Shigella*, *Shewanella*, *Serratia*, *Mahella*, *Lachnospira*, *Klebsiella*, *Idiomarina*, *Fusobacterium*, *Faecalibacterium*, *Eubacterium*, *Enterococcus*, *Enterobacter*, *Eggerthella*. The species can also originate from fungal groups like yeasts, ascomycetes, zygomycetes and deuteromycetes that are most preferably from the groups *Aspergillus*, *Torulopsis*, *Zygosaccharomyces*, *Hansenula*, *Candida*, *Saccharomyces*, *Clavispora*, *Bretanomyces*, *Pichia*, *Amylomyces*, *Zygosaccharomyces*, *Endomycess*, *Hyphopichia*, *Zygosaccharomyces*, *Kluyveromyces*, *Mucor*, *Rhizopus*, *Yarrowia*, *Endomyces*, and/or *Penicillium*.

In accordance with the invention a species from the genus or group as mentioned above can be used in a long-life probiotic food product in a dormant form (i.e. as spores or/and as a non active form that can appear when the right conditions for vegetative growth are not in the environment of the cells, and thus the cell will stay in rest or is dormant). It will be apparent to the skilled person that a food-product comprising probiotics in dormant form cannot be excluded from also comprising probiotics that are no longer viable (these neither aid nor hamper the invention). In an alternative embodiment, depending on the food product, its desired shelf life, and its preservation circumstances, it is well possible for the dormant probiotics as used in accordance with the invention to be combined with regular, unchanged probiotics. It is preferred if at least half of the probiotics in the product is in the dormant state, and more preferred if this is around 50:50 (i.e. 60:40 to 40:60). However, considering the wide range of quantities of probiotics that can be used in food products, it is possible to combine unchanged probiotics and dormant probiotics (such as spores), in a number ratio ranging from 90:10 to 10:90 or even 99:1 to 1:99.

The fungal, yeast or bacterial species from the genus or groups as mentioned above can be applied as a spore or as a non-spore product as described herein as a probiotic in a long-life product, which are by definition not pathogenic. It is therefore believed that basically all non-pathogenic microbial species of fungal, yeast and bacterial origin that are able to remain in a dormant or spore form state can be used in a long-life probiotic product.

Bacterial spores (also known as endospores) are a resting phase displayed by some types of bacteria. Endospores are formed within vegetative cells (sporangia) in response to adverse changes in the environment. The original bacterial cell replicates its genetic material, and one copy of this becomes surrounded by a tough coating. The outer cell then disintegrates, thus releasing a spore that is well protected by the coating against influences such as heat, cold, radiation, or lack of needs such as nutrients, water or air. Spores essentially are capable of germinating and thus providing growth of the hitherto sporulated bacteria.

Fungal spores are a resting phase displayed by yeast and fungal cells under certain environmental conditions displayed by many fungal and yeast cells. In its natural environment, asexual reproduction via vegetative spores or through mycelial fragmentation allows more rapid dispersal than sexual reproduction. For example, sporulation of the baker's yeast Saccharomyces cerevisiae is a response to nutrient depletion. The construction of the spores can be divided into two phases. The first is the generation within the cell cytoplasm of new membrane compartments that give rise to the plasma membranes of the spore. In the second phase, the spore matures by becoming surrounded by a multilaminar spore wall that provides resistance to environmental stresses. Asexual spores colonize new environments upon germination dependent on the environmental condition like for example water activity, light, nutrients and/or preservatives (natural or synthetic ingredients that are added to foods to prevent decomposition by microbial growth through limiting vegetative growth).

Thus, the probiotic yeast, fungal and/or bacterial spores present in the long-life food products of the invention are in fact probiotic yeast, fungi or bacteria or combination thereof in a "dormant" stage. A preferred form for this invention is the spore form of the yeasts, fungi and/or bacteria but there are also environmental conditions that keep cells in this dormant stage. Also these probiotic cells from fungal, yeast or bacterial origin that are not in spore form are part of the long-life probiotic food product according to the invention. After consumption of the food product, the spores are allowed to germinate, or the environmental condition will change the "dormant" state of the fungal, bacterial or yeast cells, in the intestines, and thus yield their health benefits where needed, comparable to the consumption of the yeast, fungi or bacteria themselves. The spores or dormant cells might also be effective in the gastrointestinal tract while still in their dormant or spore phase without becoming vegetative (e.g. by competitive exclusion of pathogen binding sites or stimulation of the immune system by the cell wall proteins, glycoproteins or structures).

Whilst the probiotic bacterial, fungal or yeast spores can be incorporated into a variety of long-life food products, the invention most preferably pertains to products that are acidic. The acidity of the product will preserve the bacterial spores in the dormant stage. Upon consumption, this stage will be preserved through the stomach (which obviously is an acidic environment). Upon pH increase in the intestines, the spores are allowed to germinate. A reference in this respect is Gabriella Casula and Simon M. Cutting, Applied and Environmental Microbiology, May 2002, pages 2344-2352. The invention also pertains to products that have other specific environmental conditions like e.g. a low water activity (e.g. in condensed milk), products that do not contain specific nutritional requirements for the used probiotic species in spore form or in dormant state, but also the absence/presence of light and/or oxygen. The bacterial, yeast or fungal spores and/or dormant cells will dependent on the strains and condition used stay in its dormant state but in case of opening the packaging and consumption, the cells may start to germinate and become vegetative.

The products of the invention are stored in a manner under which the spores and/or dormant cells will not germinate or under which the cells remain dormant e.g. environment with low water activity, and preferably are products in which the spores are prevented from germination or cells are remained dormant, such as acidic products, nutrient limiting conditions, products with preservatives, and/or dark environment or a combination of two or more of the before mentioned conditions (e.g. nutrient limitation in combination with pH and preservatives). Preferred products are selected from the group consisting of dairy drinks, products that are derived from dairy like e.g. yoghurt, but also dairy ingredients (like e.g. lactose, whey and/or casein proteins containing products) in powder form, fruit juices, and concentrates thereof. The pH of these products ranges generally from 2-7 (with fruit juices at the low end, yoghurt at 4, full fat milk at 6-7). The invention is also applicable to other acidic food products of which it is desired to provide them in a long-life (and eventual pasteurized) form such as cream cheese (pH 4.88) or cottage cheese (pH 5), hard cheeses of different ripening periods, cheese that has been fermented or that gets its typical taste after exposure to bacterial or fungal, either in or outside the cheese, or fruit preparations. One can also apply the invention to condensed milk with or without sugars in which the water activity is low. Another application can involve packaging materials that will leave the product in the dark.

As mentioned above, the invention relates to long-life food products. These are products that can be stored without refrigeration, and particularly fruit juices, fruit drinks, and dairy products that have been rendered suitable for storage without refrigeration. By "storage" it is referred to the period between the tamper-proof packaging of the product, particularly the dairy drink or fruit juice or fruit-juice containing drink, until the opening of the tamper-proof packaging for the purpose of consuming the product. This storage period is generally recognizable with reference to a "best before" date (or similar wording in different languages) on the package.

With reference to dairy products, e.g. dairy drinks such as milk, chocolate milk, yoghurt drinks, a long-life product can have a shelf-life (non-refrigerated) of more than 12 days. Particularly, it refers to a shelf-life (non-refrigerated storage period) of more than 45 days, and particularly of from 45 days to 6 months, preferably 6-12 months, and more preferably 12-24 months. Sweet condensed milk can have a storage life of 5-10 years. For fruit juices a long-life product will generally have a shelf-life (non-refrigerated storage period) of 13 to 26 weeks. Fruit-juice containing drinks have a shelf-life (non-refrigerated storage period) of 3-6 months or above. The non-refrigerated storage refers to storage at ambient conditions, which may differ per climate region. Of course, occasionally, storage outside of a refrigerator can occur in an environment having a temperature coinciding with refrigerator temperature, say up to 7°C or below, e.g. 0°C. Whilst it is thus not precluded that long-life food products are stored at such low temperatures, the skilled person will fully understand that the term "long-life" refers to the ability of storage at temperatures above that of a refrigerator, which will generally be higher than 8°C, particularly at least 10°C, and generally up to 50°C, particularly up to 40°C. Notably, such storage will be on the shelf of a store, e.g. at 15°C -25°C.

Various methods of rendering food products "long-life" exist. These range from temperature treatments such as pasteurization and sterilization, to addition of preserving agents. In the context of the invention, and commensurate with the normal meaning of the term, sterilization treatment refers to such a high-temperature treatment as will kill all life forms, including spores. It will be apparent that the invention does not apply to adding dormant cells or spores before conducting a process, such as sterilization, in which it is intended to kill all microbial life. It will be well understood by the skilled person that, in th evenet of long-life products subjected to such a process, the dormant probiotics can be applied to long-life food products, i.e. after these products have been subjected to heat-treatment processes that can range from pasteurization to sterilisation.

Long-life dairy products and fruit products are generally obtained by pasteurization. Pasteurization refers to various forms of elevated temperature treatment, with the temperature and time of the treatment determining the result. Thus regular pasteurized "fresh" milk that can be stored for a few weeks, if refrigerated, is treated by a so-called HTST process ("high temperature/short time). This regular pasteurization generally refers to heating at about 72°C for 15-20 seconds. Rather than to such "fresh" milk, the invention is particularly applied to products that are so pasteurized as to be suited for non-refrigerated storage (referred to, in the context of the invention, as 'long-life pasteurization'). Other reasons why food products are suitable for long-life storage is because of low pH and/or low water-activity and/or nutrient limitation and/or presence of preservatives and/or lack of light in food products.

Pasteurization is generally done in a plurality of subsequent heat treatments or in a single heat treatment, normally at a temperature in the range of from 60°C to 110°C.The heat treatment process of pasteurization is not only dependent on the treated material but also on other conservation parameters like pH, storage temperature in stock, and water activity.

A particular example of heat treatment is the UHT treatment (Ultra High Temperature). This can be generally referred to as ultra-pasteurization. Preferred treatments are those referred to in Tetra Pak Diary Processing Handbook (for dairy products) and Steven Nagy, Fruit Juice Processing Technology. Particularly suitable UHT treatments are heating at 135-150°C for 15-4 seconds (diary) and in the case of fruit juice for 15-60 seconds at 95-90°C. A further preferred treatment, notably for dairy products, is at a temperature of 138°C or 143°C for a fraction of a second.

Another 'long-life pasteurization' treatment, i.e. a pasteurization treatment resulting in long-life products, is HHST (higher heat/shorter term) which lies in between HTST and UHT in terms of time and temperature. Irrespective of the exact treatment chosen for providing a long-life, the invention preferably pertains to products that can be stored outside of a refrigerator, and particularly products that have undergone a temperature treatment to achieve this status.

The above makes particular reference to bacteria. However, the invention is not limited thereto. Spores of all fungi and yeasts capable of sporulation or resting in a dormant phase can be used. Probiotic bacteria are known to the skilled person and do not require elucidation here. The same holds for the knowledge of which (filamentous) fungal and bacteria are capable of sporulation. Preferred examples include yeast and fungi *Apergillus oryzae*, *Aspergillus soyae, Torulopsis versatilis, Zygosaccharomyces solae, Hansenula spp. (e.g anomala), Torulopsis spp., Candida etchellsii, Candida versatilus, Saccharomyces spp. (S. cerevisiae, S. boulardii, S. uvarum, S. elegans, S. bayanus), Candida krusei, Clavispora lusitaniae, Bretanomyces spp., Pichia saitoi, Amylomyces rouxii, Zygosaccharomyces major, Endomycess spp., Hyphopichia burtonii, Zygosaccharomyces rouxii, Kluyveromyces spp., Mucor indicus, Rhizopus oligosporus, Rhizopus chinensis, Rhizopus oryzae, Yarrowia lipolytica*, *Endomyces fibuliger*, *Penicillium roqueforti*, *Penicillium camemberti*, *Penicillium candidum*, *Penicillium caseicolum*, *Penicillium album*, *Penicillium nalgiovenese*, *Penicillium chrysogenum*, and bacteria like *Bacillus subtilis*, *B. subtilis (natto)*, *Bacillus thuringiensis*, *B. licheniformis*, *B. cereus*, *B. megaterium*, *Paenibacillus polymyxa*, *B. pumilus*, *B. polyfermenticus*, *B. cluasii*, *B. lactosporus*, *Brevibacillus lactosporus*, *Lactobacillus sporogenes*, *B. coagulans*, *Paenibacillus polymyxa or P. polymyxa*, *B. laterosporus*. The most preferred are bacteria of the genus *Bacillus,* the most preferred of which include *B. subtilis*, *B. subtilis (natto)*, *B. pumilus*, *B. licheniformis*, *and B. coagulans*.

The probiotic bacterial spores can be obtained in various manners. To begin with, they can be just purchased e.g. products are on the market with different names like AlCare^{tm}, Bactisubtil, Bidisubtilus, Bioplus 2B, Biosubtyl, Biosporin and many others containing different of the above mentioned spore forming species. Further, they can be produced generally by growing bacteria on a suitable medium, and then subjecting the grown culture to sporulation-inducing circumstances. The latter can involve various ways of providing some sort of shock to the bacteria, e.g. by elevated temperature, by changing salt concentration in the medium in which they are contained, by changing pH, etc. The medium can be solid or liquid. An example of the spore formation process of a bacterial model organism *Bacillus cereus*, can be found in the thesis of Dr. de Vries entitled *Bacillus cereus* spore formation, structure and germination (Thesis Wageningen University, 2006). An example of the fungal spore formation process can be found in a paper written by Dr Neiman entitled Ascospore formation in the yeast Saccharomyces cerevisiae (Microbiol Mol Biol Rev. 2005, 69:565-584). Fungal and/or yeast spores and/or fungal, yeast or bacterial cells that remain in the dormant phase can be purchased by suppliers of the products or produced after they have been obtained without any restriction from the Centraalbureau voor Schimmelcultures (CBS) in the Netherlands, the Institute for Fermentation (Osaka City) and the American Type Culture Collection (ATCC) in USA.

After production or purchase, it may be desired to purify the spore culture or cells culture obtained from unwanted enzymes, cell debris, cell culture medium and non-spore cells. This can be done by making use of the high density of the spores as compared to vegetative cells and cell debris.

In case of a spore culture, it is preferred to use a spore preparation that is substantially pure (e.g. more than 90% phase bright spores as determined by phase contrast microscopy).

In the products of the invention a wide range of spores can be included, generally sufficient to consume from 10⁶ to 10⁹ CFU (colony forming units) per day. Thus, a food product of the invention will generally comprise 10⁶ to 10⁹ CFU of probiotic spores per daily portion of the food product, preferably 10⁷ to 10⁸ CFU. Preferably this range is consumed throughout the day (e.g. 4 times a dose of 10⁷ CFU to reach a total doses of 4X10⁷ CFU a day) but it is also possible to consume one dose of spores a day in a fruit or dairy based product. The number of colony forming units per quantity of the product will depend on the size of a daily portion. This will vary from product to product and from consumer to consumer. Generally, a regular intake of dairy drinks and food drinks is of from 100 to 800 ml per day, on which basis the products of the invention preferably comprise of from 10³ to 10⁹ CFU per ml, from 10⁴ to 10⁸ CFU per ml, or from 10⁵ to 10⁷ CFU per ml.

The spores can be included in the food product before pasteurization. It is also possible to first pasteurize the spores separately, and then add them to the food product.

Amongst others, the probiotic spores are used to prevent, treat or improve the resistance against human infections of viral, bacterial, fungal or parasitic origin. Infections of the gastrointestinal tract comprise gastroenteritis, which is characterized by infections and/or inflammations of the mucosae of the stomach and the intestines, and acute and chronic diarrhea. Gastrointestinal symptoms are also understood to mean specific diseases such as for instance a *Helacobacter pylori* infection. Respiratory diseases comprise infections which relate to inflammation of the smaller airways (bronchitis) which are caused by (*inter alia*) bacterial or viral (*inter alia* common cold and influenza virus) infection or a combination thereof. This is also understood to mean: influenza the contagious viral infectious disease, which often occurs as an epidemic. Other examples are severe inflammations of the lung tissue due to various microorganisms, and pneumonitis, a term which is typically used in case of a mild form of pneumonia. Further, this also includes common cold, which is in fact an inflammation of the mucosa in the nasal cavity and pharynx and/or the paranasal sinuses of the head (maxillary sinuses and sinus cavities) and is particularly caused by the picorna viruses, but also diseases related to CNSLD (Chronic Non-Specific Lung Disease) such as asthma, chronic bronchitis and pulmonary emphysema. In fact, the above means: all locations on or in the body where an imbalance can occur in the harmless microflora naturally present. This imbalance can occur as a result of a change in the microflora naturally present or as a result of contracting an infection from outside the body. This usually involves a disease the body will need to resist immunologically in order to become healthy or free of the infection or imbalance again.

The probiotic spores that are used in the long-life products of the invention can be of different origin. Also, spores can be combined in a long-life probiotics food product. For example one strain of Bacillus in spore form could be combined with another probiotic strain in spore form in the same long-life product. It is also possible to combine more than 2 probiotic strains in spore form in a long-life probiotic product (e.g. 3, 4, 5 or more then 5 different probiotic strains in spore form in one product). In the products of the invention the advantages of probiotics (provided in the form of spores) can be further broadened by the addition of prebiotic substances. Prebiotics substances are non-digestible food ingredients that beneficially affect the host by selectively stimulating the growth and/or activity of one or a limited number of bacteria in the intestines (notably the colon), and thus improve host health. The best-known prebiotic substances are non-digestible oligosaccharides. Examples of suitable prebiotics are fructo and/or galacto-oligosaccharides, with short or long chains, inulin, fucose-containing oligosaccharides, beta glycans, carob flour, gums, pectins, sialyloligosaccharides, sialyllactose, galactans with short or long chains, and nucleotides. Regular amounts of these substances are known to the skilled person and will preferably be about up to 0.1-10 grams, preferably 1-5 grams, or 2-3 grams a day dependent on the prebiotic substances.

The dairy products according to the invention can be produced in a manner known for these products (i.e. obtaining milk from a cow, goat, or other dairy farm animal and subjecting it to the usual treatments to obtain milk or other dairy drinks such a yoghurt drinks, chocolate milk, and the like). In general these products may or may not comprise ingredients such as a source of protein, a source of lipids, a source of carbohydrate. The products may be diet products or not, with a caloric content preferably in between 0 and 500 kcal per 100 ml product. This holds, *mutatis mutandis*, for fruit products according to the invention. The general composition of dairy and fruit products, preferably drinks or concentrates, is fully known in the field.

Milk can be from e.g. cow, buffalo, goat, sheep, or camel. The product or drink can also be on the basis of dairy alternatives, such as soy.

### Examples

### Example 1

500 litre skimmed milk was standardised to yield a milk liquid with a protein content of e.g. 35.8% protein/milk solids non fat with lactose or whey permeate. Separately, 6.5 kg Cardio Aid phytosterols from ADM (containing >56% total phytosterols; 40-58% beta-sitosterol; 0-5% beta-sitostanol; 20-30% campesterol; <5% campestanol; 14-22% stigmasterol; <3% brassicasterol; < 3% other sterols or stanols) were added to the fat fraction comprising palm oil, while mixing. This fat/sterol mixture is added to the milk via fat injection as described as follows.

The milk liquid was heated to 120°C by known techniques, followed by sustained heating for 3 minutes. The hot milk was then transferred into the first effect of a falling film evaporator and evaporated to a solids content of approximately 24%. Under the down pipes of the second effect, the fat mixture with sterols was added in a constant flow, evenly distributed over 80% of the required evaporation time. In the same way a polar lipid fraction comprising milksphingolipids was incorporated. The milk with fat, sterols and, sphingolipids was homogenised in a two-step homogeniser to a fat particle size between 0.36 micrometer and 0.47 micrometer (measured with coulter LS13 320) to yield a milk concentrate with a cholesterol-lowering effect. Depending on the stability of the evaporate, phosphates and/or citrates and/or carbonates are added. The milk after addition of a dormant culture (e.g. Bacillus subtilis) was transported over a distance of 300 km and there standardised to drink milk with a dry matter content of 12.5%.

### Example 2

A yoghurt was prepared under standard condition trough a fermentation procedure involving a selection of Lactobacillus cultures. To the yoghurt a culture of *Pichia pastoris* was added at a concentration of 2X10⁶ CFU/ml. The yeast plate count (CFU/ml) remained stable over a period of 4 weeks after storage at 15 degrees Celcius.

### Example 3

The species *Brevibacillus brevis* and *Bacillus brevis* will germinate in the presence of a specific mixture of amino acids without vitamins. An orange based fruit juice is prepared that contains naturally present vitamins and that contains a low concentration of amino acids. An example of an amino acid that was low in concentration in the fruit juice was the amino acid tyrosine. The fruit juice has a pH in between 2.5 and 4.5. The pure *Brevibacillus brevis* and *Bacillus brevis* spores were added to the fruit juice in a concentration of 5X10⁶ CFU/ml and thereafter a mild pasteurisation process was used. More then 50% of all spores survived the pasteurisation process. After one year storage of this drink at different temperatures ranging from 5 - 50 degrees Celcius, it was shown with taste and shelf-life testing that the product was remarkably unaffected. The CFU/ml were under some storage conditions around 5X105 as was determined by counting colony forming units on plate count milk agar.

### Example 4

An orange based fruit juice is prepared from concentrated orange juice powder as is common practise by fruit juice manufacturers. The juice was mildly pasteurized and spores of *Aspergillus oryzae* were added to the fruit drink. The pure fungal spores were added to the fruit juice in a concentration of 10⁶ CFU/ml. After 3 months storage of this drink at different temperatures at 5, 10 at 20 degrees Celcius and in the dark (meaning that the packaging material did not leave any light through), it was shown with sensory and shelf-life testing that the product is not effected. Similarly it is expected that after 1 and 2 years of shelf-life testing in the dark that the product will not be affected as will be shown with sensory and shelf-life testing.

### Example 5

A natural drinking yoghurt without flavor and a pH of around 4 was pasteurized with different sterilization methods e.g. a batch pasteurization 10 minutes at 75-85 degrees Celsius. The batch pasteurization was performed according to characteristic heating and cooling profiles. Another sterilization process was continuous in which several methods were used ranging from 2-30 seconds at temperatures from 110 to 65 degrees Celcius. Thereafter the drinking yoghurt was enriched with different spores: *Bacillus subtilis*, *Bacillus pumilus* and *Bacillus flexus* at a concentration of 10E⁷ CFU/ml. All these spores were >99% pure as determined by phase contrast microscopy. The different spore drinks were stored in the dark at temperatures ranging from 5-40 degrees Celsius for about 2 and a half year. Plate count milk agar showed a slight decrease of the number of spores present in the yoghurt and sensory tests did not show any remarkable difference

### Example 6

3 different fruit drinks with pH ranges from 3.0 to 4.5 know under the trade names Coolbest Acai powerfruit, Appelsientje (sinaasappel met vruchtvlees mild), en Appelsientje appel (troebel, mild) were enriched with *Bacillus subtilis* spores until a concentration of 4X10⁶ CFU/ml and pasteurized during 1 second at 95 degrees Celcius. The drinks were stored at 7 degrees Celsius and 20 degrees Celsius and the survival of spores was determined after 22 months. It appeared that after colony counts that more then 1% of the 4X10⁶ CFU/ml survived these storage conditions.

### Example 7

Bacterial spores that are pure and without vegetative cells, enzymatic activity and left over from growth media were isolated from a solid phase (spores were harvested by washing the surface with water) and liquid culture (spore were produced in the liquid medium) method. The purity of the spores is essential for some of the mentioned applications as described in the examples (e.g. example 5). The spore preparations should be produced with a purity of >99% and in some cases a purity of 75-90% might do while dependent on the carrier even a preparation of 50-75% purity might do as was determined with a phase contrast microscopy. These preparations are prepared with a method based on separation on the basis of density (= mass and volume) of the individual components that are present in a raw spore culture medium. Normally, the spores should be washed at least 4-10 times with distilled water followed by a separation on the basis of density of the types of cells (e.g with centrifugal forces or filtration techniques) to reach the desired purity of the spores suspension.

### Example 8

A condensed milk product was prepared from low-fat and high fat milk products with a pH of about 6 to 7 by known and standardised production procedures. The milk (derived) product was evaporated by a step wise process in which the temperature decrease gradually from 130 to 75 degrees Celcius (or vice versa) for certain time periods until the desired milk concentrate is reached. To this evaporated milk product a concentration of 0% until a concentration of saturation with sugar was added to create a sweet and condensed milk with a long shelf-life. This product has a very low water activity which makes that spores or dormant cells stay in their dormant phase of the life-cycle. The different sweet and condensed milks were inoculated with *Saccharomyces cerevisiae*, *Aspergillus oryzae*, *Aspergillus niger*, *Aspergillus soyae, Bacillus subtilis, Bacillus megaterium, Bacillus pumilus, Bacillus brevis* spores and/or dormant cells. It appeared that all concentrations of CFU/ml remained stable for at least 16 months after storage at ambient temperature.

### Example 9

Spores of *Saccharomyces boulardi*, *Saccharomyces cerevisiae*, *Aspergillus oryzae*, *Aspergilus niger*, *Aspergillus soyae*, *Bacillus subtilis*, *Bacillus thuringiensis*, *B. licheniformis*, *B. cereus*, *B. megaterium*, *Paenibacillus polymyxa*, *B. pumilus*, *B. polyfermenticus*, *B. cluasii*, *B. lactosporus*, *Brevobacillus lactosporus*, *Lactobacillus sporogenes*, *B. coagulans*, *B. polymyxa*, *B.laterosporus* were mixed at concentrations of 10⁷ CFU/g powder in different badges with Lactose, Vivinal GOS and different protein preparations e.g. those that are know under the name Deminal90 and Hiprotal90. During a period of 1 year the counts (CFU/g) were measured every 4 months and in these products that were store at 20 degrees Celcius the colony forming units remained constant (all above 10⁶ CFU/g).

## Claims

1. A long-life food product selected from the group consisting of dairy products having a non-refrigerated shelf-life of more than 12 days, fruit juices having a non-refrigerated storage period of 13 to 26 weeks, and fruit-juice containing drinks having a non-refrigerated storage period of at least 3 months, comprising probiotic organisms in a dormant state.

2. A long-life food product according to claim 1, wherein the probiotic organisms are selected from the group consisting of fungi, yeast and bacteria capable of sporulation.

3. A long-life food product according to claim 1, comprising dormant fungal, yeast or bacterial cells.

4. A long-life food product according to any one of the preceding claims, being a dairy product having a non-refrigerated shelf-life of 12 to 24 months.

5. A long-life food product according to any one of the preceding claims, wherein the organisms in the dormant state are selected from the group consisting of *Clostridia* and/or *Bacillus* and preferably of *B. subtilis*, *B. subtilis (natto)*, *B. pumilus*, *B. licheniformis*, *and B.coagulans*.

6. A long-life food product according to any one of the claims 1 to 4, wherein the organisms in the dormant state are selected from the group consisting of *Apergillus oryzae*, *Aspergillus soyae*, *Hansenula spp.*, *Torulopsis spp.*, *Candida spp.*, *Saccharomyces spp.*, *Clavispora spp.*, *Bretanomyces spp.*, *Pichia spp.*, *Endomycess spp.*, *Kluyveromyces spp.*, *Rhizopus spp.*, *Yarrowia lipolytica*, *Endomyces fibuliger*, *Penicillium spp.*, mixtures thereof and mixtures with subspecies of *Clostridia* and/or *Bacillus*.

7. A long-life food product according to any one of the preceding claims, comprising probiotic spores or probiotics in a dormant phase of which the cells when leaving this dormant or spore phase can produce at least one ingredient (such as vitamin K2, antibiotics or LCPUFA's) that promote health benefits.

8. A long-life food product according to any one of the preceding claims, comprising both probiotic spores and cells, the cells being selected from the group consisting of viable cells, non-viable cells, and mixtures thereof.

9. A long-life food product according to any one of the preceding claims, wherein the product has been subjected to a long-life pasteurisation treatment, particularly by HHST or UHT.

10. A long-life food product according to any one of the preceding claims, comprising 10⁴ to 10¹⁰ CFU (colony forming units) of probiotic spores per daily portion of the food product, preferably from 10⁵ to 10¹⁰ CFU, more preferably from 10⁶ to 10⁹ CFU, most preferably from 10⁸ to 10⁹ CFU.

11. A long-life food product according to claim 10, wherein the product is a liquid comprising of from 10⁵ to 10⁸ CFU per ml, typically of from 12,500 to 50,000,000 CFU per ml, and preferably of from 10⁵ to 10⁶ CFU per ml.

12. A long-life food product according to any one of the preceding claims, comprising at least one probiotic substance, preferably selected from the group consisting of fructo-oligosaccharides, galacto-oligosaccharides, fructo-galacto-oligosaccharides, inulin, fucose-containing oligosaccharides, beta glycans, carob flour, gums, pectins, sialyloligosaccharides, sialyllactose, galactans, and nucleotides.

13. The use of probiotic spores, preferably selected from the group of bacterial spores, yeast spores, fungal spores, and/or dormant Bacterial, fungal and/or yeast cells and/or mixtures thereof, as a probiotic ingredient in a long-life food product selected from the group consisting of dairy products having a non-refrigerated shelf-life of more than 12 days, fruit juices having a non-refrigerated storage period of at 13 to 26 weeks, and fruit-juice containing drinks having a non-refrigerated storage period of at least 3 months.

14. A use according to claim 13, for the purpose of retaining the shelf-life of a long-life food product while rendering the product into a probiotic food product.

## Patentansprüche

1. Lang haltbares Nahrungsmittelerzeugnis, ausgewählt aus der Gruppe bestehend aus Molkereierzeugnissen mit einer ungekühlten Haltbarkeit von mehr als 12 Tagen, Fruchtsäften mit einer ungekühlten Lagerdauer von 13 bis 26 Wochen und Fruchtsaft enthaltenden Getränken mit einer ungekühlten Lagerdauer von mindestens 3 Monaten, das probiotische Organismen in einem ruhenden Zustand umfasst.

2. Lang haltbares Nahrungsmittelerzeugnis gemäß Anspruch 1, worin die probiotischen Organismen aus der Gruppe bestehend aus Pilzen, Hefe und Bakterien, die zur Sporulation fähig sind, ausgewählt ist.

3. Lang haltbares Nahrungsmittelerzeugnis gemäß Anspruch 1, das ruhende Pilz-, Hefe- oder bakterielle Zellen umfasst.

4. Lang haltbares Nahrungsmittelerzeugnis gemäß irgendeinem der Ansprüche, das ein Molkereierzeugnis mit einer ungekühlten Haltbarkeit von 12 bis 24 Monaten ist.

5. Lang haltbares Nahrungsmittelerzeugnis gemäß irgendeinem der vorhergehenden Ansprüche, worin die Organismen im Ruhezustand aus der Gruppe bestehend aus Clostridia und/oder Bacillus und vorzugsweise aus B. subtitlis, B. subtilis (natto), B. pumilus, B. licheniformis und B. coagulans ausgewählt sind.

6. Lang haltbares Nahrungsmittelerzeugnis gemäß irgendeinem der Ansprüche 1 bis 4, worin die Organismen im Ruhezustand aus der Gruppe bestehend aus Aspergillus oryzae, Aspergillus soyae, Hansenula spp., Torulopsis spp., Candida spp., Saccharomyces spp., Clavispora spp., Bretanomyces spp., Pichia spp., Endomyces spp., Kluyveromyces spp., Rhizopus spp., Yarrowia lipolytica, Endomyces fibuliger, Penicillium spp., Mischungen daraus und Mischungen mit Unterarten von Clostridia und/oder Bacillus ausgewählt sind.

7. Lang haltbares Nahrungsmittelerzeugnis gemäß irgendeinem der vorhergehenden Ansprüche, das probiotische Sporen oder Probiotika in einer Ruhephase umfasst, deren Zellen, wenn sie diese Ruhe- oder Sporenphase verlassen, mindestens einen Inhaltsstoff (wie beispielsweise Vitamin K2, Antibiotika oder langkettige, mehrfach ungesättigte Fettsäuren (LCPUFA's)) herstellen können, der gesundheitlichen Nutzen fördert.

8. Lang haltbares Nahrungsmittelerzeugnis gemäß irgendeinem der vorhergehenden Ansprüche, das sowohl probiotische Sporen als auch Zellen umfasst, wobei die Zellen aus der Gruppe bestehend aus lebensfähigen Zellen, nichtlebensfähigen Zellen und Mischungen daraus ausgewählt sind.

9. Lang haltbares Nahrungsmittelerzeugnis gemäß irgendeinem der vorhergehenden Ansprüche, worin das Erzeugnis einer Pasteurisierungsbehandlung für lange Haltbarkeit unterzogen wurde, insbesondere durch HHST oder UHT.

10. Lang haltbares Nahrungsmittelerzeugnis gemäß irgendeinem der vorhergehenden Ansprüche, das 10⁴ bis 10¹⁰ CFU (colony forming units, Kolonie-bildende Einheiten) an probiotischen Sporen pro täglicher Portion des Nahrungsmittelerzeugnisses, vorzugsweise 10⁵ bis 10¹⁰ CFU, stärker bevorzugt 10⁶ bis 10⁹ CFU, am stärksten bevorzugt 10⁸ bis 10⁹ CFU umfasst.

11. Lang haltbares Nahrungsmittelerzeugnis gemäß Anspruch 10, worin das Erzeugnis eine Flüssigkeit ist, die von 10⁵ bis 10⁸ CFU pro ml, typischerweise von 12.500 bis 50.000.000 CFU pro ml und vorzugsweise von 105 bis 10⁶ CFU pro ml umfasst.

12. Lang haltbares Nahrungsmittelerzeugnis gemäß irgendeinem der vorhergehenden Ansprüche, das mindestens eine probiotische Substanz, vorzugsweise ausgewählt aus der Gruppe bestehend aus Fructo-Oligosacchariden, Galacto-oligosacchariden, Fructo-Galacto-oligosacchariden, Inulin, Fucose enthaltenden Oligosacchariden, Beta-Glycanen, Johannisbrotmehl, Gummis, Pectinen, Sialyl-Oligosaccahriden, Siylyllactose_{;} Galactanen und Nucleotiden umfasst.

13. Verwendung probiobitscher Sporen, vorzugsweise ausgewählt aus der Gruppe der bakteriellen Sporen, Hefesporen, Pilzsporen und/oder ruhenden bakteriellen, Pilz- und/oder Hefezellen und/oder Mischungen daraus, als probiotischer Inhaltsstoff in einem lang haltbaren Nahrungsmittelerzeugnis, das aus der Gruppe bestehend aus Molkereierzeugnissen mit einer ungekühlten Haltbarkeit von mehr als 12 Tagen, Fruchtsäften mit einer ungekühlten Lagerdauer von 13 bis 26 Wochen und Fruchtsaft enthaltenden Getränken mit einer ungekühlten Lagerdauer von mindestens 3 Monaten ausgewählt ist.

14. Verwendung gemäß Anspruch 13 zum Zweck der Erhaltung der Haltbarkeit eines lang haltbaren Nahrungsmittelerzeugnisses bei gleichzeitiger Überführung des Erzeugnisses in ein probiotisches Nahrungsmittelerzeugnis.

## Revendications

1. Produit alimentaire ayant une longue durée de conservation, choisi dans le groupe constitué par les produits laitiers ayant une durée de conservation sans réfrigération supérieure à 12 jours, les jus de fruits ayant une durée de conservation sans réfrigération de 13 à 26 semaines, et les boissons contenant des jus de fruits et ayant une durée de conservation sans réfrigération d'au moins 3 mois, comprenant des organismes probiotiques dans un état dormant.

2. Produit alimentaire ayant une longue durée de conservation selon la revendication 1, dans lequel les organismes probiotiques sont choisis dans le groupe constitué par les champignons, les levures et les bactéries capables de sporuler.

3. Produit alimentaire ayant une longue durée de conservation selon la revendication 1, comprenant des cellules fongiques, de levure ou bactériennes dormantes.

4. Produit alimentaire ayant une longue durée de conservation selon l'une quelconque des revendications précédentes, qui est un produit laitier ayant une durée de conservation sans réfrigération de 12 à 24 mois.

5. Produit alimentaire ayant une longue durée de conservation selon l'une quelconque des revendications précédentes, dans lequel les organismes à l'état dormant sont choisis dans le groupe constitué par *Clostridia* et/ou *Bacillus* et de préférence *B. subtilis*, *B. subtilis* (*natto*), *B. pumilus*, *B. licheniformis*, et *B. coagulans*.

6. Produit alimentaire ayant une longue durée de conservation selon l'une quelconque des revendications 1 à 4, dans lequel les organismes à l'état dormant sont choisis dans le groupe constitué par *Aspergillus oryzae*, *Aspergillus soyae*, *Hansenula spp.*, *Torulopsis spp.*, *Candida spp.*, *Saccharomyces spp.*, *Clavispora spp.*, *Bretanomyces spp.*, *Pichia spp.*, *Endomyces spp.*, *Kluyveromyces spp.*, *Rhizopus spp.*, *Yarrowia lipolytica*, *Endomyces fibuliger*, *Penicillium spp.*, leurs mélanges et leurs mélanges avec des sous-espèces de *Clostridia* et/ou *Bacillus.*

7. Produit alimentaire ayant une longue durée de conservation selon l'une quelconque des revendications précédentes, comprenant des spores probiotiques ou des probiotiques en phase dormante dont les cellules, lorsqu'elles quittent cette phase dormante ou de spores, peuvent produire au moins un ingrédient (tel que la vitamine K2, des antibiotiques ou des LCPUFA) qui favorisent des bénéfices pour la santé.

8. Produit alimentaire ayant une longue durée de conservation selon l'une quelconque des revendications précédentes, comprenant à la fois des spores et des cellules probiotiques, les cellules étant choisies dans le groupe constitué par les cellules viables, les cellules non viables, et leurs mélanges.

9. Produit alimentaire ayant une longue durée de conservation selon l'une quelconque des revendications précédentes, lequel produit a été soumis à un traitement de pasteurisation de longue période, en particulier un traitement HHST ou UHT.

10. Produit alimentaire ayant une longue durée de conservation selon l'une quelconque des revendications précédentes, comprenant 10⁴ à 10¹⁰ CFU (unités formant des colonies) de spores probiotiques par portion journalière du produit alimentaire, de préférence de 10⁵ à 10¹⁰ CFU, mieux encore de 10⁶ à 10⁹ CFU, tout spécialement de 10⁸ à 10⁹ CFU.

11. Produit alimentaire ayant une longue durée de conservation selon la revendication 10, lequel produit est un liquide comprenant de 10⁵ à 10⁸ CFU par ml, typiquement de 12 500 à 50 000 000 CFU par ml, et de préférence de 10⁵ à 10⁶ CFU par ml.

12. Produit alimentaire ayant une longue durée de conservation selon l'une quelconque des revendications précédentes, comprenant au moins une substance probiotique, de préférence choisie dans le groupe constitué par les fructo-oligosaccharides, les galacto-oligosaccharides, les fructo-galacto-oligosaccharides, l'inuline, les oligosaccharides contenant du fucose, les bêta-glycanes, la farine de caroube, les gommes, les pectines, les sialyloligosaccharides, le sialyl-lactose, les galactanes, et les nucléotides.

13. Utilisation de spores probiotiques, de préférence choisis dans le groupe des spores bactériennes, des spores de levure, des spores fongiques, et/ou des cellules bactériennes, fongiques et/ou de levure dormantes, et/ou leurs mélanges, en tant qu'ingrédient probiotique dans un produit alimentaire ayant une longue durée de conservation, choisi dans le groupe constitué par les produits laitiers ayant une durée de conservation sans réfrigération supérieure à 12 jours, les jus de fruits ayant une durée de conservation sans réfrigération de 13 à 26 semaines, et les boissons contenant des jus de fruits et ayant une durée de conservation sans réfrigération d'au moins 3 mois.

14. Utilisation selon la revendication 13, ayant pour but de maintenir la durée de conservation d'un produit alimentaire ayant une longue durée de conservation tout en transformant le produit en un produit alimentaire probiotique.
